# FASCICULE DE BREVET EUROPEEN

(11) **EP 1 649 966 B1**
(45) Date de publication et mention de la délivrance du brevet: **18.05.2011**
(21) Numéro de dépôt: 05109916.6
(22) Date de dépôt: 24.10.2005
(51) Int. Cl.: B23K 26/38, B23K 26/14

(54) **Utilisation d'une buse pour tête de perçage par faisceau laser**
Anwendung einer Düse für einen Laserbohrkopf
Use of a nozzle for a laser drilling head

(30) Priorité: 25.10.2004 FR 0452437
(43) Date de publication de la demande: 26.04.2006
(73) Titulaire: SNECMA, 75015 Paris (FR)
(72) Inventeur: Antoine, Lucien, Louis, Nicolas, 95130 Franconville (FR); Guesdon, Hervé, Jacques, Christian, 93310 Le Pré Saint-Gervais (FR); Schuster, Fabrice, Frédéric, Louis, 95520 Osny (FR)
(74) Mandataire: David, Daniel

(56) Documents cités:
- EP-A- 0 876 870
- EP-A- 1 127 652
- EP-A- 1 273 382
- FR-A- 2 850 892
- US-A- 5 083 006
- VANDERWERT T L ET AL: "LASER DRILLING EFFUSION COOLING HOLES IN LOW NOX TURBINE ENGINE COMPONENTS" ASME TURBO ASIA CONFERENCE, XX, XX, novembre 1996 (1996-11), pages 1-8, XP002925532

## Description

La présente invention se rapporte au perçage de pièces métalliques ou non métalliques au moyen d'un faisceau laser.

Elle concerne en particulier l'utilisation d'une buse pour une tête de perçage par faisceau laser dans un appareil d'usinage à faisceau laser utilisé notamment pour le perçage d'orifices dans une paroi métallique ou non, inaccessible ou difficilement accessible aux outils de perçage par faisceau laser de l'art antérieur.

Dans l'industrie aéronautique, on utilise couramment la technique des faisceaux lasers pulsés de type YAG-Nd pour percer des orifices de faible diamètre dans la paroi de certaines pièces de moteur comprenant une turbine ou un compresseur. Il s'agit par exemple de pièces soumises à de hautes températures telles que les aubes de turbine ou les ailettes de distributeurs dans la partie à haute pression de la machine ou bien encore d'éléments de paroi de la chambre de combustion du moteur. Ces orifices ont pour fonction de permettre l'écoulement de filets d'air depuis l'intérieur de la pièce, qui en assurent le refroidissement et une protection thermique.

Selon cette technique de perçage, on dirige un faisceau laser pulsé, d'énergie appropriée, contre la paroi en le focalisant sur la zone à percer. Le matériau est alors porté à une température élevée entraînant localement sa fusion et partiellement sa vaporisation. Le matériau en fusion est expulsé par le fluide d'assistance que l'on injecte dans l'axe du faisceau ; il laisse un orifice dans la paroi. On perce ainsi couramment des orifices généralement cylindriques, de diamètre allant de 0,2 mm à 1,5 mm pour une profondeur de 0,8 à 20 mm ainsi que des perçages de formes variées : losange, trous de forme, etc. Les matériaux concernés dans le domaine des moteurs à turbine à gaz sont principalement des alliages à base nickel ou cobalt éventuellement avec un revêtement formant une barrière thermique. Cependant tous les matériaux sont concernés. Un faisceau laser pulsé de type YAG Nd utilisé dans ce domaine d'application produit selon un exemple une énergie de 4 Joules, à une fréquence de 30 Hz avec une durée d'impulsion de 1,2 ms et une puissance de crête de 3,3 kW pour une puissance moyenne de 120 W.

Les appareils d'usinage à faisceau laser utilisés actuellement comprennent une tête d'usinage de forme sensiblement tubulaire ou tronconique comportant un système optique, comportant au moins une lentille de focalisation du faisceau, par lequel le faisceau émis est concentré en un faisceau plus dense à une distance déterminée par la focale de l'optique. La tête se termine par une buse droite traversée par le faisceau formant également buse d'injection pour le fluide d'assistance, par exemple gazeux. Le faisceau est placé selon un angle déterminé par rapport à la surface de la zone à traiter, pour le perçage de trous. En raison de la structure de la tête d'usinage et de sa géométrie, un espace suffisant doit donc être disponible dans l'axe du trou à percer dans la paroi pour pouvoir placer l'outil. Cet espace dans la technologie actuelle est au minimum celui entre le point de focalisation (zone de perçage) et la lentille de focalisation, soit un encombrement important limitant très fortement les possibilités d'accès aux perçages

Cependant avec l'évolution des techniques de fabrication de certaines pièces, on rencontre maintenant des difficultés pour la mise en oeuvre de l'usinage par faisceau laser en raison des formes en présence, plus complexes. Certaines zones se révèlent ne pas être accessibles par le faisceau laser. Les têtes de perçage par faisceau laser avec leur buse d'extrémité, connues du déposant, comportent toutes un chemin optique rectiligne. Ainsi, lorsqu'une pièce comporte une portion de surface masquée par une autre partie de la pièce, celle-ci ne peut être atteinte par le faisceau produit en sortie d'une telle buse. Rendre mobile la tête de perçage, sur laquelle la buse est montée, ne résout pas ce problème d'accessibilité.

Le problème se pose en particulier maintenant avec l'évolution des techniques de fonderie, pour la fabrication de secteurs de distributeurs.

La technique de fabrication de tels secteurs selon l'art antérieur consistait à couler les éléments de distributeur à une seule pale, de procéder au perçage de la paroi de la pale - accessible avec les buses droites de l'art antérieur - puis à braser deux éléments le long des plates-formes pour obtenir un bloc bipale. Une tête d'usinage droite convient pour le perçage individuel des pales. Cependant cette méthode de fabrication est très longue, onéreuse, et implique des problèmes de qualité en raison des risques liés à l'assemblage par brasage des pales, des risques dimensionnels sur la section de passage, etc. Elle rend par ailleurs la pièce fragile au joint d'assemblage.

On est maintenant capable de réaliser de fonderie des pièces bipales ou plus avec leurs circuits intégrés de refroidissement. Le perçage des orifices de refroidissement d'un tel élément ou secteur de distributeur monobloc comportant au moins deux pales entre la plate-forme inférieure et la plate-forme supérieure, n'est pas possible partout avec une buse droite. Certaines parties sont inaccessibles.

La société déposante s'est donc fixé comme objectif l'utilisation d'une buse permettant un accès à des zones offrant une faible accessibilité dans le cadre de l'usinage ou la réparation d'une pièce de moteur à turbine à gaz.

Conformément à l'invention on parvient à cet objectif en utilisant une buse dans une machine de perçage, émettant un faisceau laser pulsé, dont la tête de perçage comporte un moyen adapté pour le montage de la buse, la buse comportant une première ouverture d'entrée de faisceau laser et une deuxième ouverture de sortie du faisceau laser pulsé, un moyen de focalisation du faisceau étant ménagé en amont de la deuxième ouverture.

Cette buse est caractérisée par le fait qu'un miroir est placé sur le chemin optique du faisceau laser en aval dudit moyen de collimation, de manière que le faisceau sortant forme un angle inférieur à 85° avec le faisceau entrant, la buse comprenant une alimentation en fluide d'assistance du faisceau laser agencée de telle sorte que ledit fluide soit émis par la seconde ouverture dans la direction du faisceau laser.

Grâce à l'invention on peut réaliser une buse que l'on peut incliner fortement par rapport à la surface de la pièce à traiter, en fonction de la place disponible au dessus de la surface et dans l'axe du trou à percer.

Par ailleurs, une buse conforme à l'invention en permettant la réalisation de perçages dans des zones inaccessibles auparavant, ouvre la possibilité de réaliser des gains importants en rendement des refroidissements.

Une telle buse permet aussi d'optimiser les méthodes de fabrication et d'ouvrir les possibilités de conception de certaines pièces dans la mesure où celles-ci ne sont pas liées à la nécessité de prévoir une accessibilité au moyen de perçage.

Le fluide d'assistance est avantageusement un gaz dont la fonction n'est pas seulement de participer à l'évacuation des scories produites par le faisceau mais aussi de refroidir le miroir qui est soumis à l'impact du faisceau laser focalisé et d'assister à la fusion et l'évacuation des particules le cas échéant.

On connaît déjà des têtes de soudage par faisceau laser avec une buse d'extrémité comportant un miroir de renvoi du faisceau à 90°. Par exemple, le déposant est titulaire d'un brevet, EP 1 273 382, portant sur un appareil de soudage par faisceau laser miniaturisé. L'objet de ce brevet porte sur une tête de soudage dont l'ouverture frontale peut être amenée très près de la surface à souder sans que les composants optiques soient maculés par les vapeurs et projections de métal en fusion et sans que ce métal en fusion soit perturbé par le flux de gaz sortant de l'ouverture frontale. Cependant ce type d'outil est conçu pour venir dans le prolongement d'une fibre optique et comporte un système optique adapté avec notamment lentille de collimation et lentille de focalisation. Même s'il est dit être miniaturisé, il reste d'un encombrement important par rapport à l'application envisagée dans la présente invention. Par ailleurs les lasers utilisés pour le soudage sont des équipements à gaz du type CO₂ continu contrairement aux lasers d'usinage qui se caractérisent par un fonctionnement en mode impulsionnel avec une puissance de crête déterminée. L'enseignement de ce brevet n'est donc pas approprié pour une application à l'usinage de pièces métalliques.

De préférence, le miroir est maintenu par un moyen de fixation amovible qui permet de remplacer rapidement le miroir après une série de tirs, sans avoir à changer la buse.

Conformément à une autre caractéristique, la seconde ouverture de la buse est pourvue d'un moyen de protection contre la projection de scories par la pièce en traitement. Ce moyen de protection, qui est par exemple une lame, évite que le miroir de renvoi soit maculé par les scories.

Conformément à l'invention également, on utilise une telle buse pour le perçage d'orifices de refroidissement sur les pales d'un élément de roue de distributeur de moteur à turbine à gaz, en particulier aéronautique, constitué d'au moins deux pales. En particulier, on vise le cas d'une roue complète telle qu'un disque à aubage monobloc.

Le diamètre est alors adapté pour en permettre le positionnement entre les pales d'un secteur de distributeur haute pression de turbine de moteur à turbine à gaz.

Pouvoir percer les pales d'un bloc de distributeur à deux pales constitue un avantage important sur le plan de leur fabrication. La section de passage entre les pales d'un distributeur est un paramètre important pour le fonctionnement du moteur. C'est elle qui calibre le flux gazeux sortant de la chambre de combustion et qui entraîne le rotor haute pression. Habituellement les mono pales issues de fonderie sont assemblées par brasage. Les tolérances sur le brasage et l'usinage doivent être adaptées au niveau de tolérance très fin sur la section de passage imposé par le fonctionnement du moteur. Ainsi, outre le gain en productivité, pouvoir réaliser des blocs de distributeur à deux pales directement, peut présenter un intérêt également sur l'amélioration du rendement du moteur et rend la pièce plus solide par la suppression d'un assemblage.

Conformément à une autre caractéristique, le point focal du faisceau est distant du miroir d'une distance inférieure à 15 mm. Dans le cas des distributeurs, cette distance permet une miniaturisation suffisante de la buse par rapport à la place disponible entre les pales du bloc pour un accès optimal en tout point des surfaces intrados et extrados. Cette distance, très faible, permet une accessibilité très grande pour tous les autres types de pièce, tels que les anneaux de chambre de combustion par exemple ou tout autre application nécessitant des perçages non accessibles avec la technologie des buses droites l'art antérieur.

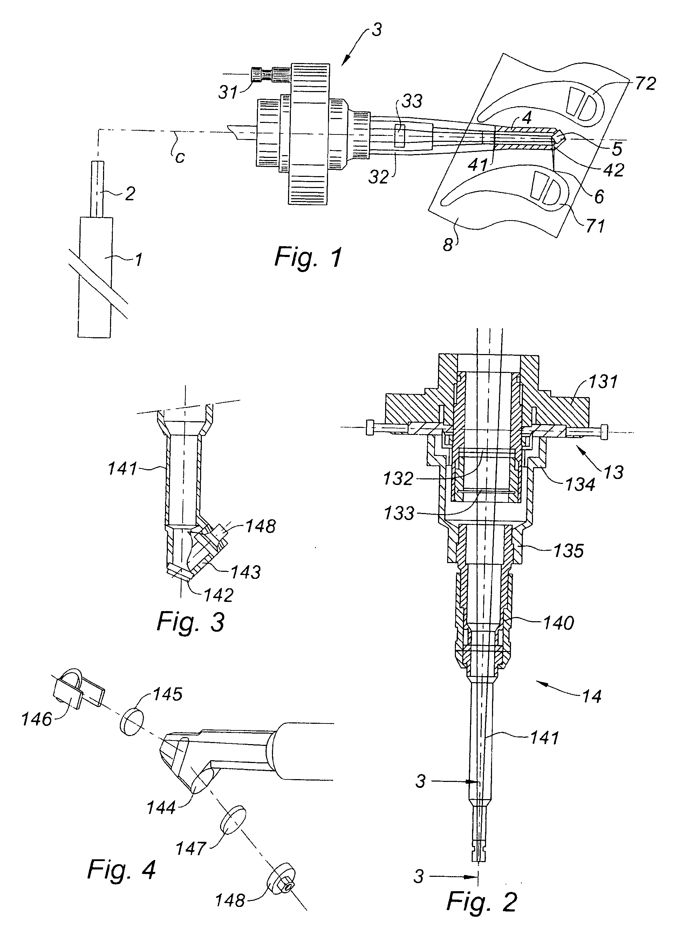

D'autres caractéristiques et avantages ressortiront de la description qui suit d'un mode de réalisation en relation avec les dessins annexés sur lesquels :
- 1a figure 1 représente schématiquement un dispositif de perçage par faisceau laser selon l'invention,
- 1a figure 2 représente en coupe longitudinale une tête d'usinage et une buse selon l'invention,
- la figure 3 est une vue agrandie de l'extrémité de la buse de la figure 2 en coupe selon 3-3,
- la figure 4 montre l'extrémité de la buse avec les différents éléments la constituant en vue éclatée.

On a représenté sur la figure 1 un exemple de réalisation d'un dispositif de perçage par faisceau laser selon l'invention. Seuls les éléments essentiels sont reproduits. Ils sont ici en position pour le perçage de pales de distributeurs.

La source laser 1 est par exemple de type YAG-Nd pulsé à longueur d'onde 1064 µm ; un faisceau laser 2 est transmis par l'appareil jusqu'à la tête d'usinage 3. Cette tête comprend une entrée 31 de fluide d'assistance et une portion tubulaire 32 le long du chemin optique C du faisceau. A l'intérieur de la tête se trouve également le système optique 33 de focalisation du faisceau. Il s'agit d'une lentille dont la distance focale détermine le point de focalisation du faisceau en aval de celle-ci.

Une buse 4 en métal par exemple, est fixée de manière amovible à l'extrémité aval de la tête 3 dans le prolongement du chemin optique du faisceau laser. La buse comprend une première ouverture 41 d'entrée du faisceau laser issu de la portion tubulaire de la tête 3, et une deuxième ouverture 42 de sortie du faisceau. Selon le mode de réalisation représenté, la sortie 42 est latérale. Un miroir de renvoi 5 est disposé en travers du chemin optique C avec ici un angle de 45° et dévie donc le faisceau à 90°. Le faisceau laser convergent se concentre en un point à une distance du miroir de renvoi, dit point de focalisation. Cette buse 4 conforme à l'invention est montée sur la tête 3 en remplacement d'une buse droite de l'art antérieur. Dans ce mode de réalisation, la tête 3 et l'ensemble de l'appareil ne nécessitent donc pas de modification. Seule la buse 4 est nouvelle.

Le miroir de renvoi interceptant le faisceau après sa focalisation, la densité d'énergie réfléchie est très importante. Les facteurs à prendre en considération concernant le miroir sont en particulier sa limite de résistance et sa durée de vie. Le premier est déterminé par la densité d'énergie du laser et le second par la puissance de crête. Les miroirs à haute tenue de flux sont constitués d'un substrat et d'un traitement selon la longueur d'onde utilisée. Deux exemples de matériaux pour constituer le substrat sont la silice fondue et un verre borosilicaté (BK7). Ils ont une tenue au flux de 73J/cm² pour le BK7 et de 75 J/cm² pour la silice fondue. Les traitements sont constitués de couches de diélectriques qui déterminent la longueur d'onde et l'angle d'incidence du miroir.

En raison du renvoi du faisceau latéralement, on peut venir percer des zones peu accessibles d'une pièce. Comme on le voit sur la figure 1, la pièce 71, respectivement 72, est une pale d'un bloc 8 de distributeur de moteur à turbine à gaz, constitué de deux pales 71 et 72. Grâce au dispositif de l'invention, il n'est pas nécessaire de séparer les deux pales. La buse 4 en bout de la tête 3 peut se glisser dans l'espace ménagé entre les deux pales du bloc, et venir percer les orifices aussi bien le long de l'extrados de la pale 71 que le long de l'intrados de la pale adjacente 72. Le diamètre de la buse est par exemple de 10 mm à proximité de son extrémité. Elle peut être mis en place dans un espace aussi faible que 20 mm.

On a représenté sur la figure 2 un deuxième mode de réalisation de buse. La tête 13 comprend une platine 131 avec une lentille 132 de focalisation protégée par une lame 133. L'ensemble est couvert d'une virole 134 prolongée par un support 135 pour la buse 14. La buse 14 est montée sur le support 135 par un organe extérieur d'accouplement 140. Le corps de la buse lui-même est constitué de portions 141 cylindriques de diamètres décroissants vers son extrémité.

La figure 3 montre l'extrémité de la buse plus en détail, et la figure 4 les différentes pièces qu'elle comprend en représentation éclatée. La buse est percée dans le prolongement de sa partie tubulaire et comprend un logement 142 pour un miroir 145. Le miroir est maintenu dans son logement par un clip 146 constitué d'un anneau et de deux branches avec des crochets qui se logent dans des encoches ménagées dans le tube. L'anneau permet à la partie du faisceau transmise et non réfléchie par le miroir de ne pas être absorbée par la buse. Le miroir est placé dans le logement de manière à former un angle prédéterminé avec le chemin optique du faisceau laser. Dans la direction formée par le chemin optique après sa réflexion sur le miroir 145, la buse comprend une portion de tube 143 qui se termine par un logement transversal 144 pour une lame de protection 147 disposée transversalement au chemin optique ; la lame 147 est maintenue par une pièce formant injecteur 148 et comportant un pas de vis.

Un canal non visible sur les figures met l'intérieur du tube 141 en communication avec l'injecteur 148.

En fonctionnement le faisceau laser est focalisé par la lentille 132 et réfléchi par le miroir 145 ; la densité du faisceau est maximale au point focal situé en aval de l'injecteur 148. Un fluide d'assistance est introduit sous pression dans la buse, coaxialement avec le faisceau et est injecté dans la direction du faisceau sortant par la l'injecteur 148. Ce fluide contribue au refroidissement du miroir en balayant sa surface. La lame de protection empêche les scories éjectées de la zone de traitement de venir maculer le miroir.

L'angle que fait le faisceau sortant par la deuxième ouverture de la buse avec le faisceau incident est déterminé par la géométrie de la pièce à traiter. Ici l'angle est de 45°, il peut être différent. De préférence il est inférieur à 85°, compris par exemple entre 30° et 80°.

En jouant sur la distance entre le miroir 145 et la lentille de focalisation 132, on peut ajuster la distance du point focal F par rapport au miroir 145 à une valeur optimale compte tenu de la tenue de ce dernier à l'énergie qu'il doit absorber. En effet en reculant le miroir, on rapproche le point focal du miroir mais la densité d'énergie du faisceau sur le miroir augmente jusqu'à atteindre une valeur limite au delà de laquelle le miroir se dégrade rapidement. Pour palier cet inconvénient on peut allonger la distance focale en utilisant une lentille de focalisation appropriée.

Il est à noter qu'en raison de la miniaturisation de la buse, un moyen permettant le centrage fin de la position de celle-ci peut avantageusement être prévu.

Conformément à un autre mode de réalisation non représenté, le miroir 145 est de type concave.

Conformément à un autre mode de réalisation on place en aval du miroir 145 une lentille complémentaire de focalisation.

On a réalisé des essais de perçage d'un bloc constitué de deux pales assemblées entre deux plates-formes pour un distributeur haute pression monocristallin ou équiaxe refroidi d'un moteur à turbine à gaz. La buse, et en particulier son extrémité supportant le miroir, était suffisamment miniaturisée pour avoir accès à la majorité des deux surfaces intrados et extrados en vis-à-vis. On a ainsi utilisé un jeu de buses avec des angles de renvoi différents selon la zone à atteindre et pour partie une buse droite. La source laser utilisée était de type YAG Nd pulsé présentant les caractéristiques de celle présentée plus haut.

## Revendications

1. Utilisation d'une buse (4, 14) pour l'usinage ou la réparation d'une pièce de moteur à turbine à gaz dans une machine de perçage par faisceau laser pulsé, avec une tête comportant un moyen adapté pour le montage de la buse, la buse comportant une première ouverture d'entrée de faisceau laser, une deuxième ouverture de sortie du faisceau laser pulsé, et un moyen de focalisation du faisceau ménagé en amont de la deuxième ouverture, **caractérisée par le fait que** la buse comporte un miroir (5, 145) placé sur le chemin optique du faisceau laser en aval dudit moyen de focalisation, de manière que le faisceau sortant forme un angle inférieur à 85° avec le faisceau entrant, et une alimentation en fluide d'assistance du faisceau laser agencée de telle sorte que ledit fluide soit émis par la seconde ouverture dans la direction du faisceau laser.

2. Utilisation selon la revendication précédente d'une buse dont le miroir (145) est maintenu par un moyen (146) de fixation amovible.

3. Utilisation selon l'une des revendications précédentes d'une buse dont la seconde ouverture est pourvue d'un moyen (147) de protection contre la projection de scories par la pièce en traitement.

4. Utilisation selon la revendication 1 pour le perçage d'orifices de refroidissement sur les pales (71, 72) d'un secteur de roue de distributeur de moteur à turbine à gaz, constitué d'au moins deux pales.

5. Utilisation selon la revendication précédente dont le point focal du faisceau est distant du miroir (145) d'une distance inférieure à 15 mm.

6. Utilisation selon la revendication précédente pour le perçage de trous dans des zones inaccessibles avec des buses en ligne droite.

## Claims

1. A use of a nozzle (4, 14) for machining or repairing a gas turbine engine part in a pulsed laser beam drilling machine, with a head including a means suitable for mounting the nozzle, the nozzle including a first opening being a laser beam inlet opening, a second opening being a pulsed laser beam outlet opening, and a means for focusing the beam arranged upstream of the second opening, **characterized in that** the nozzle includes a mirror (5, 145) placed on the optical path of the laser beam downstream of said focusing means, such that the outcoming beam forms an angle smaller than 85° with the incoming beam, and a supply of assisting fluid for the laser beam arranged such that said fluid is emitted through the second opening towards the laser beam.

2. The use of a nozzle according to the preceding claim, wherein the mirror (145) is maintained by a removable fastening means (146).

3. The use of a nozzle according to one of the preceding claims, wherein the second opening is provided with a means (147) for protecting against the projection of slag by the part being treated.

4. The use according to claim 1, for drilling cooling holes on blades (71, 72) of a distributor wheel sector of a gas turbine engine, made up of at least two blades.

5. The use according to the preceding claim, wherein the focal point of the beam is spaced apart from the mirror (145) by a distance of less than 15 mm.

6. The use according to the preceding claim, for drilling holes in inaccessible areas with nozzles in a straight line.

## Patentansprüche

1. Verwendung einer Düse (4, 14) zum Bearbeiten oder Reparieren eines Teils eines Turbotriebwerks in einer Impulslaserstrahl-Bohrmaschine mit einem Kopf, der ein Mittel umfasst, das zur Montage der Düse geeignet ist, wobei die Düse eine erste Öffnung für den Laserstrahl-Eintritt, eine zweite Öffnung für den Impulslaserstrahl-Austritt und ein Mittel zum Fokussieren des Strahls, das vor der zweiten Öffnung angeordnet ist, umfasst, **dadurch gekennzeichnet, dass** die Düse einen Spiegel (5, 145), der auf dem Lichtweg des Laserstrahls hinter dem Fokussiermittel angeordnet ist, so dass der austretende Strahl mit dem eintretenden Strahl einen Winkel von weniger als 85° bildet, und eine Versorgung mit einem Hilfsfluid für den Laserstrahl, die derart angeordnet ist, dass das Fluid aus der zweiten Öffnung in der Richtung des Laserstrahls ausgegeben wird, umfasst.

2. Verwendung einer Düse nach dem vorhergehenden Anspruch, deren Spiegel (145) von einem abnehmbaren Befestigungsmittel (146) gehalten wird.

3. Verwendung einer Düse nach einem der vorhergehenden Ansprüche, deren zweite Öffnung mit einem Mittel (147) zum Schutz gegen das Spritzen von Schlacken durch das in Bearbeitung befindliche Teil versehen ist.

4. Verwendung nach Anspruch 1 zum Bohren von Kühlöffnungen auf den Schaufeln (71, 72) eines Verteilerradsektors eines Turbotriebwerks, bestehend aus mindestens zwei Schaufeln.

5. Verwendung nach dem vorhergehenden Anspruch, wobei der Brennpunkt des Strahls von dem Spiegel (145) um einen Abstand von weniger als 15 mm entfernt ist.

6. Verwendung nach dem vorhergehenden Anspruch zum Bohren von Löchern in Bereichen, die mit Düsen in gerader Linie unzugänglich sind.
